# EUROPÄISCHE PATENTANMELDUNG

(11) **EP 0 887 483 A1**
(43) Veröffentlichungstag der Anmeldung: **30.12.1998**
(21) Anmeldenummer: 98111282.4
(22) Anmeldetag: 18.06.1998
(51) Int. Cl.: E04B 1/84, G10K 11/168, D04H 13/00

(54) **Dämmaterial nach Art eines Masse-Feder-Systems**

(30) Priorität: 25.06.1997 DE 19726965
(71) Anmelder: Christian Heinrich Sandler GmbH & Co. KG, D-95126 Schwarzenbach a d Saale (DE)
(72) Erfinder:
(74) Vertreter: LOUIS, PÖHLAU, LOHRENTZ & SEGETH

(57) **Zusammenfassung**

Vorgeschlagen wird ein Dämmaterial nach Art eines Masse-Feder-Systems mit einer Schwerschicht in Form einer Folie oder Beschichtung als Masseelement des Masse-Feder-Systems, bei dem das Federelement des Masse-Feder-Systems aus einem Vliesstoff aus textilen Polyesterfasern gebildet ist, wobei der Vliesstoff Polyester-Bikomponenten-Bindefasern und wenigstens eine Art gekräuselter Polyesterfasern enthält.

## Beschreibung

Die vorliegende Erfindung betrifft Dämmaterial nach Art eines Masse-Feder-Systems mit einer Schwerschicht in Form einer Folie oder Beschichtung als Masseelement des Masse-Feder-Systems.

Derartige Dämmaterialien finden für die fahrgastraumseitige Dämmung des Luft- und Körperschalles bei Fahrzeugen Verwendung. Hierzu wird eine Schwerschicht in Form einer Folie oder einer Beschichtung mit einer weichen, teils elastischen Federschicht verbunden und der Verbund mit der Federschicht an der zu dämmenden, schallabgebenden Fläche befestigt. Dies kann z. B. die Stirnwand eines Kraftfahrzeugs sein.

Derartige Stirnwanddämmungen sind seit langem bekannt und sollen insbesondere im Bereich der Zündfrequenz des Motors, d. h. insbesondere von 200 bis 400 Hz, eine wirkungsvolle Schalldämpfung zeigen.

Der Einsatz derartiger Masse-Feder-Systeme ist jedoch nicht auf den Stirnwandbereich von Fahrzeugen beschränkt. Grundsätzlich sind sie zur Schalldämmung in allen Bereichen von Fahrzeugen einsetzbar, bei denen Karosserieteile als schallabgebende Flächen wirken. Darüber hinaus ist ein Einsatz auch im Maschinenbau, im Elektrogerätebau und dergleichen möglich, wobei hier der Einsatz als Dämmaterial für Maschinen- und/oder Gerätegehäuse im Vordergrund steht.

Derzeit finden als Federsysteme Schaumstoffe und Vliesstoffe Verwendung, die über eine gewisse Mindestdicke verfügen, elastische, federnde, gut rückformende Eigenschaften besitzen, bestimmte Mindestanforderungen hinsichtlich der Entflammbarkeit bzw. Schwerentflammbarkeit erfüllen und verformbar sind.

Aus der DE-AS 2732483 ist ein Masse-Feder-System mit Schaumstoff als Federelement bekannt. Da Schaumstoffe kaum einer Wiederverwertung zuzuführen und schwierig zu entsorgen sind, sind Masse-Feder-Systeme mit Schaumstoff als Federelement nicht Gegenstand der Erfindung.

Der DE-AS 1940838 ist die Ausgestaltung einer Schwerschicht eines Masse-Feder-Systemens zu entnehmen, wobei sich die genannte Druckschrift ausschließlich mit der Weiterbildung der Schwerschicht befaßt. Vliese sind in dieser Druckschrift nur als Kaschierung für die Schwerschicht offenbart.

Aus der DE 3346260 ist ein Masse-Feder-System insbesondere zur Schallisolation bei Kraftfahrzeugen bekannt, bei dem die federnde Schicht allgemein aus einem Vlies besteht. Nähere Angaben hinsichtlich weiterer Merkmale des Vlieses sind in diesem Dokument jedoch nicht offenbart.

Aus der DE-OS 4324004 ist ein Entdröhnungsbelag bekannt, der z. B. bei Haushaltsgeräten Anwendung finden soll und als Trennschicht eine Vliesschicht aufweist, um eine möglichst sortenreine Trennung der Bestandteile zu ermöglichen. Als Material für das Vlies sind dabei Fasern aus Polypropylen und/oder Polyethylen und/oder Polyamid und/oder Polyester und/oder Polyacrylnitril offenbart. Das Vlies kann weiterhin als Spinnfaservlies oder Filamentvlies ausgebildet und auch thermisch, chemisch oder mechanisch verfestigt sein. Die DE-OS 43 24 004 offenbart weiterhin, daß die Dicke des Vlieses etwa 300 bis 1000 µm betragen sollte und das Flächengewicht etwa 15 bis 150 g/m². Weiterhin kann das Vlies zur gezielten Reduzierung der mechanischen Festigkeit der Trennschicht über bewußt eingefügte Schwachstellen z. B. in Form von Verjüngungen oder Fehlstellen in Form von Löchern oder Schlitzen, versehen sein.

Heutzutage finden als Vliesstoffe üblicherweise duroplastisch oder thermoplastisch gebundene Reißbaumwollvliesstoffe Verwendung. Ein Nachteil derartiger Vliesstoffe liegt darin, daß sie erst bei Flächenmassen von mehr als 1000 g/m² eine gute Wirksamkeit und Eignung als Federelement im Masse-Feder-System zeigen. Dies ist insbesondere bei der Verwendung in Kraftfahrzeugen von Nachteil, da mit dem Kraftfahrzeuggewicht auch der Kraftstoffverbrauch des Kraftfahrzeugs steigt.

Es ist daher Aufgabe der vorliegenden Erfindung ein weiteres Dämmaterial der eingangs erwähnten Art bereitzustellen, das die aus dem Stand der Technik bekannten Nachteile nicht aufweist, wirtschaftlich herzustellen und in möglichst hohem Maß einer Wiederverwertung zuführbar ist.

Die vorliegende Aufgabe wird durch ein Dämmaterial der eingangs erwähnten Art dadurch gelöst, daß das Federelement des Masse-Feder-Systems aus einem Vliesstoff auf textilen Polyesterfasern gebildet ist, wobei der Vliesstoff Polyester-Bikomponenten-Bindefasern und wenigstens eine Art gekräuselter Polyesterfasern enthält.

Ein besonderer Vorteil der vorliegenden Erfindung liegt darin, daß eine Gewichtseinsparung von wenigstens 50 % gegenüber Dämmaterialien aus dem Stand der Technik erreicht wird, wobei gleichzeitig auch noch eine verbesserte Schalldämmung erreicht wird.

Bei einer bevorzugten Ausführungsform des erfindungsgemäßen Dämmaterials besitzt die Schwerschicht eine Flächenmasse von wenigstens 2 kg/m². Für das Federelement ist ein Flächengewicht im Bereich von 100 bis 4000 g/m² bevorzugt, insbesondere von 600 bis 1000 g/m².

Vorteilhafterweise werden als Polyester-Bikomponenten-Bindefasern solche vom side-by-side-Typ oder vom Mantel-Kern-Typ verwendet. Eine problemlose Verarbeitung der Materialien ist besonders gut möglich, wenn die Schmelzkomponente der Polyester-Bikomponenten-Bindefasern einen um wenigstens 30° C niedrigeren Schmelzpunkt als die andere Komponente der Polyester-Bikomponentenfaser besitzt. Derartige Fasern sind beispielsweise unter der Bezeichnung Melty 4080, hergestellt von der Unitika Ltd., Osaka, Japan, im Handel erhältlich, bei denen es sich um solche vom Mantel-Kern-Typ handelt.

Erfindungsgemäß wird bevorzugt, daß der das Federelement des Masse-Feder-Systems bildende Vliesstoff, bezogen auf die Summe von Polyesterfasern und Polyester-Bikomponenten-Bindefasern, 10 bis 90 Gew. % Polyesterfasern und 90 bis 10 Gew. % Polyester-Bikomponenten-Bindefasern enthält. Es wirkt sich dabei günstig auf die akustischen Eigenschaften des Masse-Feder-Systems aus, wenn wenigstens 30 Gew. % der Fasern, bezogen auf die Summe der in dem Vliesstoff enthaltenen Fasern, einen Titer von weniger als 6,7 dtex besitzen. Der restliche, auf 100 Gew.% fehlende %-Satz aller Fasern, wiederum bezogen auf die Summe der in dem Vliesstoff enthaltenen Fasern, besitzt bevorzugt einen Titer zwischen 6,7 und 30 dtex, wobei ein Titer zwischen 6,7 und 12 dtex stärker bevorzugt ist. Die Faserlänge ist abhängig von dem gewählten Vliesbildungsverfahren und für die Wirksamkeit der Erfindung von untergeordneter Bedeutung. Der Fachmann wird daher die Faserlänge gemäß seines Fachwissens entsprechend dem gewählten Vliesbildungsverfahren festlegen.

Die Dicke des Dämmaterials und somit des Vliesstoffes ist abhängig von der geforderten Mindestdicke und von der angestrebten Schalldämmung. Da die Schwerschicht in Form einer Folie oder Beschichtung vorgesehen ist, versteht sich, daß der Ausgangsvliesstoff nicht dünner sein kann, als die dickste Stelle des später durch Verformung und Laminierung mit der Schwerschicht hergestellten Dämmelements.

Der Vliesstoff kann z. B. nach dem Trockenvliesverfahren hergestellt werden. Hierbei folgt nach der Fasermischung mittels Krempel die Parallelisierung der Fasern und die Herstellung eines Vlieses. Das Vlies wird mittels Vliesleger auf die gewünschte Flächenmasse gelegt und über einem Heißluftofen verfestigt. Um z. B. die Abriebfestigkeit zu verbessern ist es von Vorteil ein zusätzliches Bindemittel vorzusehen. Ein solches zusätzliches Bindemittel kann z. B. durch Besprühen aufgebracht werden, wobei aber auch andere Arten des Aufbringens, wie z. B. als Pulvergranulat und dergleichen möglich sind. Als Bindemittel kommen allgemein auf dem Gebiet der Vliesherstellung verwendete und dem Fachmann geläufige Bindemittel in Betracht.

Anstelle des Krempelverfahrens sind auch aerodynamische Vliesbildungsverfahren geeignet, wie z. B. die Vliesherstellung auf dem System K12/V21, der Fa. Ernst Fehrer, Linz, Österreich.

Die geforderte Verformbarkeit ist aufgrund der Beimischung von Polyester-Bikomponenten-Bindefasern gegeben, weil eine derartige Faser aufgrund ihres niedrigschmelzenden Mantels thermoplastische Eigenschaften besitzt und die Bearbeitung des Vliesstoffs und/oder des Dämmaterials mittels eines Tiefziehprozesses, bei dem der Vliesstoff und/oder das Dämmaterial mittels einer Wärmequelle vorgeheizt und in Form und Gegenform tiefgezogen wird, ermöglicht. Das erfindungsgemäße Dämmaterial kann auch mit heißen Presswerkzeugen weiter verarbeitet werden, da die aufgebrachte Schwerschicht stabilisierend wirkt.

Durch die erfindungsgemäße Verwendung des angegebenen Vliesstoffs für das Dämmaterial ergeben sich weitere Vorteile, wie z. B. eine geringe Foggingneigung und eine Schwerentflammbarkeit nach MVSS 302, wobei letztere ohne eine zusätzliche Flammschutzausrüstung erzielt wird. Dies wirkt sich günstig auf die Herstellungskosten des erfindungsgemäßen Dämmaterials aus.

Es hat sich überraschenderweise gezeigt, daß das erfindungsgemäße Dämmaterial einem bekannten Dämmaterial nach Art eines Masse-Feder-Systems, welches duroplastisch oder thermoplastisch gebundene Baumwolle als Feder enthält, weit überlegen ist. Wie im nachfolgenden Beispiel gezeigt, ergibt sich besonders im Bereich der Zündfrequenz von 200 bis 400 Hz bei halber Flächenmasse und identischer Schwerschicht noch eine Verbesserung der Schallverminderung um etwa 5 dB. Mit dem erfindungsgemäßen Dämmaterial ist es daher möglich eine wesentliche Reduzierung des Geräuschanfalls zu erreichen, obwohl die Masse des Federelements halbiert wurde.

### Beispiel 1:

- Federschicht:: Sawaflor(R), eingetragene Marke der Firma
Christian Heinrich Sandler GmbH & Co. KG,
Lamitzmühle 1, 95126 Schwarzenbach/S., 4040
800 g/m², bestehend aus 27 % Polyester-Biko-
Faser, 4 den, 51 mm der Unitika Ltd./Osaka,
50 % Polyester-Faser 3,3 dtex/60 mm gekräuselt
und 23 % Polyester-Faser 6,7 dtex/60 mm gekräuselt, Flächenmasse 800 g/m², Dicke 25 mm
- Schwerschicht:: 6 kg/m²

### Beispiel 2:

### (Vergleichsbeispiel)

- Federschicht;: BW-Vlies, Flächenmasse 1600 g/m², Dicke 19 mm
- Schwerschicht:: 6 kg/m² (gleiche Schwerschicht wie in Beispiel 1)

### Die Messungen wurden in Anlehnung an die DIN 52210 durchgeführt.

Fig. 1 zeigt das Ergebnis der in Abhängigkeit von der Frequenz durchgeführten Durchschallmessungen zu Beispiel 1 und 2. Aus dem Diagramm wird die mehr als gleichwertige Schalldämmung bei gleichzeitiger 50 %-iger Masseeinsparung durch das erfindungsgemäße Federelement ersichtlich.

## Patentansprüche

1. Dämmaterial nach Art eines Masse-Feder-Systems mit einer Schwerschicht in Form einer Folie oder Beschichtung als Masseelement des Masse-Feder-Systems und einem Federelement aus Vliesstoff,
**dadurch gekennzeichnet,**
daß das Federelement des Masse-Feder-Systems aus einem Vliesstoff aus textilen Polyesterfasern gebildet ist, wobei der Vliesstoff Polyester-Bikomponenten-Bindefasern und wenigstens eine Art gekräuselter Polyesterfasern enthält.

2. Dämmaterial gemäß Anspruch 1,
**dadurch gekennzeichnet**,
daß die Schwerschicht einer Flächenmasse von wenigstens 2 kg/m² besitzt.

3. Dämmaterial gemäß Anspruch 1 oder 2,
**dadurch gekennzeichnet**,
daß das Federelement ein Flächengewicht im Bereich von 100 bis 4000 g/m² besitzt.

4. Dämmaterial gemäß Anspruch 3,
**dadurch gekennzeichnet**,
daß das Federelement ein Flächengewicht im Bereich von 600 bis 1000 g/m² besitzt.

5. Dämmaterial gemäß einem der vorhergenden Ansprüche,
**dadurch gekennzeichnet**,
daß die Polyester-Bikomponenten-Bindefasern solche vom side-by-side-Typ oder Mantel-Kern-Typ sind.

6. Dämmaterial gemäß einem der vorhergehenden Ansprüche,
**dadurch gekennzeichnet**,
daß die Schmelzkomponente der Polyester-Bikomponenten-Bindefasern einen um wenigstens 30° C niedrigeren Schmelzpunkt als die andere Komponente der Polyester-Bikomponenten-Bindefasern besitzt.

7. Dämmaterial gemäß einem der vorhergehenden Ansprüche,
**dadurch gekennzeichnet**,
daß der Vliesstoff, bezogen auf die Summe von Polyesterfasern und Polyester-Bikomponentenfasern, 10 bis 90 Gew. % Polyesterfasern und 90 bis 10 Gew. % Polyester-Bikomponenten-Bindefasern enthält.

8. Dämmaterial gemäß einem der vorhergehenden Ansprüche,
**dadurch gekennzeichnet**,
daß wenigstens 30 Gew. % der Fasern, bezogen auf die Summe der in dem Vliesstoff enthaltenen Fasern, einen Titer von weniger als 6,7 dtex besitzen.

9. Dämmaterial gemäß Anspruch 8,
**dadurch gekennzeichnet**,
daß die auf 100 % fehlende Fasermenge des Vliesstoffs einen Titer zwischen 6,7 und 30 dtex besitzt.

10. Dämmaterial gemäß Anspruch 8,
**dadurch gekennzeichnet**,
daß die auf 100 % fehlende Fasermenge des Vliesstoffs einen Titer zwischen 6,7 und 12 dtex besitzt.

11. Dämmaterial gemäß einem der vorhergehenden Ansprüche,
**dadurch gekennzeichnet**,
daß der Vliesstoff weiterhin ein zusätzlich aufgebrachtes Bindemittel enthält.
